# EUROPÄISCHE PATENTSCHRIFT

(11) **EP 0 303 134 B1**
(45) Veröffentlichungstag und Bekanntmachung des Hinweises auf die Patenterteilung: **21.07.1993**
(21) Anmeldenummer: 88112435.8
(22) Anmeldetag: 01.08.1988
(51) Int. Cl.: G01N 21/74, H05B 3/06

(54) **Kontaktanordnung für die Stromzufuhr zu einem Ofen bei der Atomabsorptions-Spektroskopie**
Electrode arrangement for supplying current to a furnace in atomic absorption spectroscopy
Dispositif de contact pour l'alimentation en courant d'un four d'un spectromètre d'absorption atomique

(30) Priorität: 10.08.1987 DE 3726533; 16.10.1987 DE 3735013
(43) Veröffentlichungstag der Anmeldung: 15.02.1989
(73) Patentinhaber: BODENSEEWERK PERKIN-ELMER GMBH, D-88662 Überlingen (DE)
(72) Erfinder: Schlemmer, Gerhard Christian Ulrich, D-7776 Owingen (DE); Tamm, Rolf, D-7777 Salem 2 (DE); Roedel, Günther, D-7776 Owingen (DE)
(74) Vertreter: Weisse, Jürgen, Dipl.-Phys. Patentanwalt

(56) Entgegenhaltungen:
- US-A- 4 022 530
- US-A- 4 176 956
- US-A- 4 407 582
- SPECTROSCOPY LETTERS, Band 8, Nr. 7, 1975, Seiten 491-507, Marcel Dekker, Inc., US; J.W. ROBINSON et al.: "A metal specific atomic absorption detector for gas chromatography-its use in the determination of lead alkyls in gasoline"
- PATENT ABSTRACTS OF JAPAN, Band 6, Nr. 229 (P-155)[1107], 16. November 1982;& JP-A-57 131 038
- B. WELZ: "Atomabsorptionsspektrometrie", Weinheim,DE; Verlag Chemie, 1983
- SPECTROCHIMICA ACTA, Band 35B, Seiten 495-506, Pergamon Press Ltd.,GB, 1980;M.T.C. DE LOOS-VOLLEBREGT et al.: "Construction and performance of an a.c. modulated magnet for Zeeman atomic absorption spectroscopy"

## Beschreibung

### Technisches Gebiet

Die Erfindung betrifft eine Kontaktanordnung mit zwei Kontakten für die Stromzufuhr zu einem rohrförmigen Ofen mit einer Längsbohrung zur elektrothermischen Atomisierung einer in die Längsbohrung eingebrachten Probe bei der Atomabsorptions-Spektroskopie, wobei der rohrförmige Ofen zwei quer zur Rohrachse des Ofens sich erstreckende, diametral gegenüberliegende Kontaktansätze aufweist und in einem abgeschlossenen Hohlraum angeordnet ist.

### Zugrundeliegender Stand der Technik

Rohrförmige Öfen zur elektrothermischen Atomisierung bei der Atomabsorptions-Spektroskopie sind als "Graphitrohre" bekannt. Diese Graphitrohre werden mit ihren Stirnseiten zwischen ringförmigen Graphitkontakten gehalten, die federnd oder durch einen Stellmotor angedrückt werden. Die Graphitkontakte sitzen in Kühlmänteln. Eine zu atomisierende Probe wird durch eine seitliche Öffnung in das Graphitrohr eingebracht. Über die Graphitkontakte wird ein starker elektrischer Strom in Längsrichtung durch das Graphitrohr geleitet. Dadurch wird das Graphitrohr auf eine hohe Temperatur aufgeheizt. Die Probe wird dadurch atomisiert, so dass sich eine "Atomwolke" im Inneren des Graphitrohres bildet. Ein Messlichtbündel von einer linienemittierenden Lichtquelle, das die Resonanzspektrallinien eines gesuchten Elemtens enthält, wird durch die ringförmigen Graphitkontakte und die Längsbohrung des Graphitrohres hindurchgeleitet. Aus der Absorption, welche das Messlichtbündel dabei erfährt, kann die Menge des gesuchten Elemtens in der Probe bestimmt werden. Das Graphitrohr wird dabei von einem Schutzgas umströmt, so dass bei der Aufheizung kein Sauerstoff an das Graphitrohr gelangen kann.

Bei der Halterung des Graphitrohres an den Enden ergibt sich eine ungleichförmige Temperaturverteilung längs des Graphitrohres. Das Graphitrohr ist in der Mitte heisser als an den Enden, wo Wärme zu den gekühlten Kontakten abfliesst.

Eine solche Anordnung ist beispielsweise bekannt durch die DE-B-2 413 782 bzw. US-A-4 022 530.

Bei der Kontaktanordnung nach der US-A-4 022 530 sind die Kontakte rohrförmig ausgebildet. Die beiden Kontakte umgeben das Graphitrohr bis auf eine Trennfuge mantelförmig auf seiner gesamten Länge zwischen den Kontaktflächen. Ein Schutzgasstrom wird von beiden Enden her in das Graphitrohr eingeleitet. Dieser Schutzgasstrom tritt durch eine radiale Bohrung des Graphitrohres in der Mitte aus. Einer der rohrförmigen Kontakte weist ebenfalls eine radiale Bohrung auf, die mit der radialen Bohrung des Graphitrohres fluchtet.

Ähnliche Anordnungen sind aus der US-A-4 176 956 und Patent Abstracts of Japan, Bd. 6, Nr. 229 (P-155) (1107) bekannt.

Zur Erzielung einer günstigen Temperaturverteilung längs des Graphitrohres ist es bekannt, den Heizstrom quer durch das Graphitrohr zu leiten. Zu diesem Zweck sind bei der Kontaktanordnung nach der US-A-4 407 582 zwei Paare von miteinander verbundenen Kontakten in Form von gabelförmigen Kontaktstücken vorgesehen, die auf gegenüberliegenden Seiten radial an einem Graphitrohr anliegen. Der Heizstrom fliesst daher im Bereich der Enden in Umfangsrichtung durch das Graphitrohr. Das Graphitrohr wird also im Bereich der Enden aufgeheizt. Die Wärme fliesst von den Enden zur Mitte. Damit wird eine gleichmässigere Temperaturverteilung erhalten.

Bei dieser bekannten Kontaktanordnung liegen die Kontakte an den heissen Stellen des Graphitrohres an. Dadurch ist die Kontaktierung schlecht reproduzierbar. Ausserdem ist das Graphitrohr nur schwer mit einem Schutzgasstrom gegen den Zutritt von Sauerstoff abschirmbar. Das bedingt eine kurze Lebensdauer des Graphitrohres.

Durch die DE-OS 35 34 417 und die Veröffentlichung in Analytical Chemistry 58 (1986), 1973 ist ein Ofen für die thermoelektrische Atomisierung bei der Atomabsorptions-Spektroskopie bekannt, bei welchen ein rohrartiger Ofen von rechteckigem Querschnitt mit quer zur Ofenachse sich erstreckenden Kontaktstücken als integraler Bauteil aus Graphit hergestellt ist. Die Kontaktierung erfolgt dann in einer kalten Zone an planen Flächen.

Bei dieser bekannten Kontaktanordnung wird das Problem unreproduzierbarer Kontaktierungen vermieden. Auch hier bleibt es aber schwierig, den Ofen durch Schutzgas gegen den Luftzutritt abzuschirmen. Der Ofen mit den angeformten Kontakten ist ein relativ grosses und schwer herstellbares und damit teures Teil. Da dieser Ofen jedenfalls an bestimmten Stellen auf die hohe Atomisierungstemperatur aufgeheizt wird, stellt er ein Verschleissteil dar. Da wegen der Schwierigkeiten der Abschirmung der Ofen sowieso starkem Verschleiss unterworfen ist, werden damit die Kosten pro Messung recht hoch. Bei einer weiteren bekannten Anordnung dieser Art (Spectroscopy letters, Bd. 8, Nr. 7 1975, S. 491507, J.W. Robinson et al.: A metal specific atomic absorption detector for gas chromatography - its use in the determination of lead alkyls in Gasoline") gehen von dem Graphitrohr mittig diametral gegenüberliegende Kontaktansätze aus, die in relativ grossem Abstand vom Graphitrohr in wassergekühlten Elektroden gehaltert sind.

Die Elektroden sitzen in einem isolierenden Gehäusemantel eines wassergekühlten Gehäuses. Dieses Gehäuse bildet einen Hohlraum, der das Graphitrohr mit den Kontaktansätzen enthält.

### Offenbarung der Erfindung

Der Erfindung liegt die Aufgabe zugrunde, eine Kontaktanordnung der eingangs genannten Art mit Querheizung so auszubilden, dass der heisse Ofen wirkungsvoll gegen den Zutritt von Luftsauerstoff geschützt werden kann.

Der Erfindung liegt weiter die Aufgabe zugrunde, den Strom weitgehend verlustfrei auf den eigentlichen Ofen zu übertragen.

Eine weitere Aufgabe der Erfindung besteht darin, den Ofen nach der Messung gut zu kühlen und damit die Abkühlzeit bis zur nächsten Probendosierung zu vermindern.

Schliesslich sollen die auf hohe Temperatur aufgeheizten und damit schnellem Verschleiss unterworfenen Teile klein und leicht herstellbar und damit preisgünstig sein.

Erfindungsgemäss wird diese Aufgabe dadurch gelöst, dass
(a) die fluchtend auf einer Kontaktachse angeordneten Kontakte Kopfteile mit Vertiefungen aufweisen, die allein einen Hohlraum zur Aufnahme des rohrförmigen Ofens bilden,
(b) auf dem Grund der Vertiefungen Kontaktflächen gebildet sind, zwischen denen die Kontaktansätze des rohrförmigen Ofens gehalten werden,
(c) in einem der Kopfteile quer zu der Kontaktachse verlaufende Messlichtbündel-Bohrungen vorgesehen sind, die miteinander und mit der Längsbohrung des eingesetzten rohrförmigen Ofens fluchten,
(d) in besagtem Kopfteil weiterhin eine Probeneinlassöffnung vorgesehen ist, und
(e) in den Hohlraum Schutzgaskanäle zur Einleitung von Schutzgas münden, die in den Kontakten verlaufen.

Es sind also bei Querbeheizung grosse Kontakte vorgesehen, welche den Ofen umschliessen. Über diese grossen Kontakte ist eine weitgehend verlustfreie Stromübertragung möglich. In dem Hohlraum kann der Ofen durch einen Schutzgasstrom wirkungsvoll gegen den Zutritt von Luftsauerstoff abgeschirmt werden. Es kann ein grossflächiger Kontakt zwischen den Kontakten und den Kühlmänteln vorgesehen werden, da dieser Kontakt nicht von angeformten Ansätzen des Ofens bestimmt ist. Über diesen grossflächigen Kontakt können die Kontakte, innerhalb derer der Ofen gehalten ist, abgekühlt werden, wodurch wiederum die Abkühlung des Ofens nach jeder Messung begünstigt wird. Schliesslich kann der aufzuheizende eigentliche Ofen als kleiner und relativ einfacher Teil ausgebildet werden.

Ausgestaltungen der Erfindung sind Gegenstand der Unteransprüche.

Ausführungsbeispiele der Erfindung sind nachstehend unter Bezugnahme auf die zugehörigen Zeichnungen näher erläutert.

### Kurze Beschreibung der Zeichnungen

- Fig. 1: ist eine Ansicht eines rohrförmigen Ofens zur elektrothermischen Atomisierung von Proben bei der Atomabsorptions-Spektroskopie mit seitlichen Kontaktansätzen, in Richtung der Achse des Ofens gesehen.
- Fig. 2: ist eine Draufsicht auf den rohrförmigen Ofen von Fig. 1 und die Kontaktansätze von oben in Fig. 1 gesehen.
- Fig. 3: ist ein Längsschnitt des rohrförmigen Ofens und eines mit diesem aus einem Stück bestehenden zylinderschalenförmigen Innenteils.
- Fig. 4: zeigt eine Seitenansicht, teilweise im Schnitt, eines ersten Kontaktes einer Kontaktanordnung zur Halterung eines Ofens nach Fig. 1 bis 3.
- Fig. 5: ist eine Ansicht von rechts in Fig. 4, teilweise im Schnitt.
- Fig.6: ist eine Seitenansicht, teilweise im Schnitt, eines zweiten Kontaktes der Kontaktanordnung zur Halterung eines Ofens nach Fig.1 bis 3.
- Fig.7: ist eine Ansicht des Kontaktes von Fig.6 von links in Fig.6 gesehen.
- Fig.8: zeigt schematisch den Ofen zwischen den beiden Kontakten, die ihrerseits in Kühlblöcken gehaltert sind.

### Bevorzugte Ausführungen der Erfindung

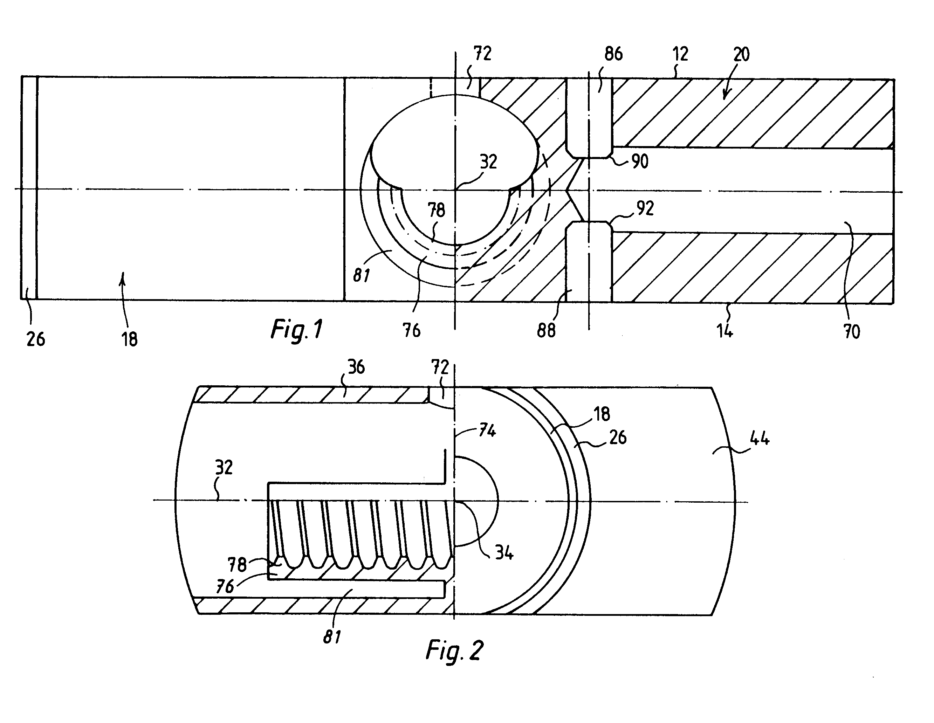

Bei dem Ofen von Fig.1 bis 3 ist mit 10 ein Graphitstück bezeichnet, das in seiner Grundform eine Platte mit einer oberen planen Fläche 12 und einer unteren planen Fläche 14 bildet. Das Graphitstück 10 weist einen Mittelteil auf, der in Draufsicht im wesentlichen die Form eines regelmäßigen Achtecks besitzt. An zwei diametral gegenüberliegenden Seite dieses Achtecks sitzen Ansätze, welche Kontaktstücke 18 und 20 bilden. Diese Kontaktstücke 18 und 20 haben zylindrische Mantelflächen 22 bzw 24, sind aber oben und unten durch die planen Flächen 12 bzw. 14 begrenzt und dadurch abgeflacht. Die Kontaktstücke 18 und 20 haben konische Kontaktflächen 26 bzw. 28. Mit diesen Kontaktflächen 26 und 28 ist der Ofen zwischen geräteseitigen Kontakten gehalten, über welche die Stromzufuhr erfolgt.

Die zu den Seiten mit den Kontaktstücken 18,20 senkrechten Seiten des Achtecks sind durch eine Bohrung 30 verbunden. Die Achse 32 der Bohrung 30 verläuft senkrecht zu der Achse 34 der Kontaktstücke. Die Bohrung 30 bildet den rohrförmigen Ofen. Der Teil des Mittelstücks zwischen den durch die Bohrung 30 verbundenen Seiten bildet einen Ofenkörper 36.

Zu beiden Seiten schließen sich an den Ofenkörper 36 Kontaktrippen 38 und 40 an. Die Kontaktrippen 38 und 40 sind in der Draufsicht von Fig.2 trapezförmig. Die Kontaktrippen 38 und 40 sind oben und unten durch die planen Flächen 12 und 14 und an den Seiten durch schräg verlaufende Seitenflächen 42,44 bzw. 46,48 begrenzt. Die lange Parallelseite des Trapezes grenzt jeweils an den Ofenkörper 36 an. Die schmale Parallelseite des Trapezes ist jeweils die ersterwähnte Seite des Achtecks und trägt das Kontaktstück 18 bzw. 20. Die Kontaktrippen 38 und 40 weisen Bereiche von vermindertem Querschnitt auf.

Bei dem Ofen nach Fig. 1 bis 3 erfolgt die Verminderung des des Querschnitts für die Stromzufuhr längs des mittleren Bereichs des Ofenkörpers 36 durch Schlitze 82 und 86,88 in den planen Flächen 12 und 14. Die Schlitze sind parallel zur Achse 32 des Ofenkörpers 36 und enden im Abstand von den Seitenflächen 42,44 bzw. 46,48. Wie aus Fig.1 ersichtlich ist, werden die Schlitze, z.B. 86 und 88 von den Schutzgaskanälen, z.B. 70, angeschnitten Das über die Schutzgaskanäle zuströmende Schutzgas tritt daher durch Öffnungen 90 und 92 in die Schlitze 86,88 und tritt durch diese Schlitze auf beiden Seiten und längs des gesamten Ofenkörpers 36 aus.

Durch die Verringerung des Querschnittes für die Stromzufuhr im mittleren Bereich des Ofenkörpers 36 wird eine besonders gleichmäßige Temperaturverteilung erreicht.

Der Ofenkörper weist eine Eingabeöffnung 72 auf, durch welche eine zu analysierende Probe in den Ofen eingegeben werden kann. Die Achse 74 der Eingabeöffnung 72 ist senkrecht zu den Achsen 32 und 34 des Ofenkörpers 36 und der Kontaktstücke 18,20. Die Achse 74 der Eingabeöffnung 72 definiert zusammen mit der Achse 32 des Ofenkörpers 36 eine Längsmittelebene. Das ist eine Ebene senkrecht zur Papierebene in Fig.2 längs der Achse 32.

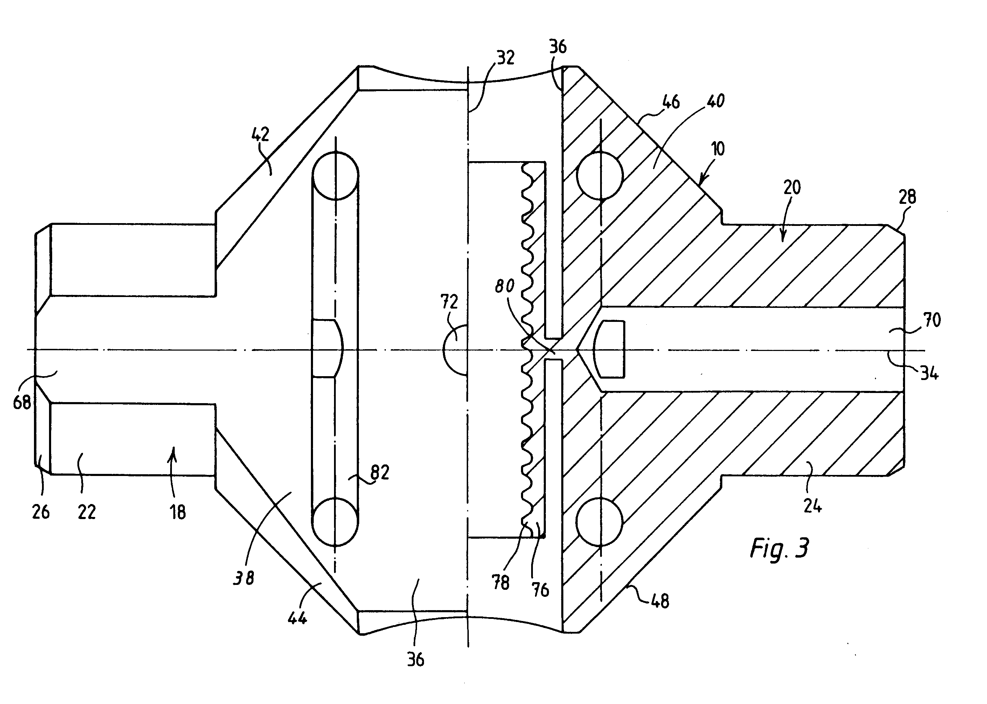

In der Bohrung 30 des Ofenkörpers 36 sitzt ein Innenkörper 76, der am besten in Fig.3 erkennbar ist. Der Innenkörper 76 ist zylinderschalenförmig, hat also etwa die Gestalt eines halben Hohlzylinders. Die Innenfläche des Innenkörpers 76 weist bei der Ausführung nach Fig.3 eine Folge von gewindeartigen Vorsprüngen 78 auf. Praktisch bilden die Vorsprünge 78 ein halbes Innengewinde. Diese Vorsprünge 78 hemmen das Auseinanderfließen einer durch die Eingabeöffnung eingebrachten flüssigen Probe in Längsrichtung des Innenkörpers 76. Die Herstellung der Vorsprünge 78 als Teil eines Innengewindes hat fertigungstechnische Gründe: Es kann dann zunächst in den rohrförmigen Innenkörper mittels eines Gewindeschneiders ein Gewinde geschnitten und der Gewindeschneider dann wieder herausgedreht werden. Anschließend wird, wie in Fig. 1 dargestellt ist, die eine Hälfte des Innenkörpers mit zwei Längsbohrungen herausgebohrt. Der Innenkörper ist in dem Ofenkörper 36 nur über einen einzigen Steg 80 in der Mitte gehalten.

Von diesem Steg 80 sind anschließend bogenförmige Schlitze 81 zwischen Innenkörper 76 und Ofenkörper 36 herausgefräst, so daß der verbleibende Steg 80 sich über einen Winkel um die Achse 32 des Ofens erstreckt, der deutlich kleiner als 180° ist. Außerdem ist dieser verbleibende Steg 80 mit Bohrungen parallel zur Achse 32 des Ofens versehen. Auf diese Weise wird verhindert, daß über den Steg ein Stromfluß stattfindet, der zu einer unmittelbaren Erhitzung des Innenkörpers 76 im Bereich des Steges 80 führen könnte. Es wird ja angestrebt, daß der Innenkörper 76 nur indirekt durch die Strahlung der Innenwandung des Ofenkörpers 36 erhitzt wird, so daß die Probe mit Verzögerung erst dann atomisiert wird, wenn die Innenwandung des Ofenkörpers schon heiß ist.

Der beschriebene Ofen wird mittels der Kontaktansätze 18,20 in einem Atomabsorptions - Spektrometer zwischen zwei Kontakten eingespannt.

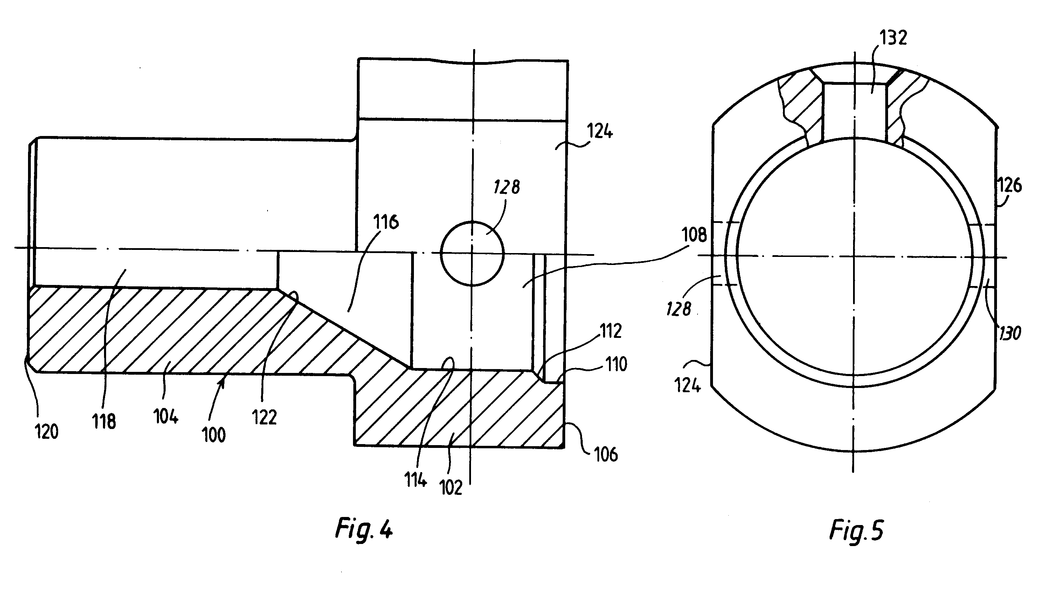

Die geräteseitigen Kontakte sind in Fig.4 bis 7 dargestellt.

Mit 100 ist ein erster Kontakt bezeichnet. Der Kontakt 100 weist einen Kopfteil 102 und einen zylindrischen Schaft 104 auf. Der Kopfteil hat eine Stirnfläche 106. In der Stirnfläche 106 ist eine Vertiefung 108 gebildet. Die Vertiefung 108 weist einen flach - zylindrischen Abschnitt 110 auf. An den flach - zylindrischen Abschnitt 110 schließt sich eine konische Schulter 112 an. Daran anschließend enthält die Vertiefung einen zylindrischen Hauptteil 114. An den zylindrischen Hauptteil 114 schließt sich ein sich konisch verengender Abschnitt 116 an. Der Abschnitt 116 erstreckt sich bis in den Schaft 104 und geht dort in einen axialen Schutzgaskanal 118 über. Der Schutzgaskanal 118 endet in der hinteren Stirnfläche 120 des Schaftes 104.

Die Innenfläche des Abschnitts 116 bildet eine konische Kontaktfläche 122 komplementär zu der Kontaktfläche 26 des Kontaktstücks 22 des Ofens. Der Ofen ist im Betrieb auf seiner einen Seite durch die Kontaktfläche 122 gehalten. Der Schutzgaskanal 118 mündet innerhalb der Kontaktfläche 122. Der Schutzgaskanal 118 steht dadurch in Verbindung mit dem in dem Kontaktstück verlaufenden Schutzgaskanal 68.

Das Kopfstück 102 ist mit parallelen seitlichen Abflachungen 124 und 126 versehen, wie am besten aus Fig.5 ersichtlich ist. In den Abflachungen sind in der Mitte des Hauptteiles 114 der Vertiefung 108 und senkrecht zur Längsachse des Kontaktes 100 fluchtende Querbohrungen 128 bzw. 130 vorgesehen. Im Betrieb fluchten diese Bohrungen 128 und 130 mit der Bohrung 30 des Ofenkörpers 36.

Parallel zu den Abflachungen 124 und 126 und senkrecht zu den Bohrungen 128 und 130 ist in dem Kopfstück eine Probeneinlaßöffnung 132 vorgesehen. Die Probeneinlaßöffnung 132 fluchtet im Betrieb mit der Eingabeöffnung 72 des Ofenkörpers 36.

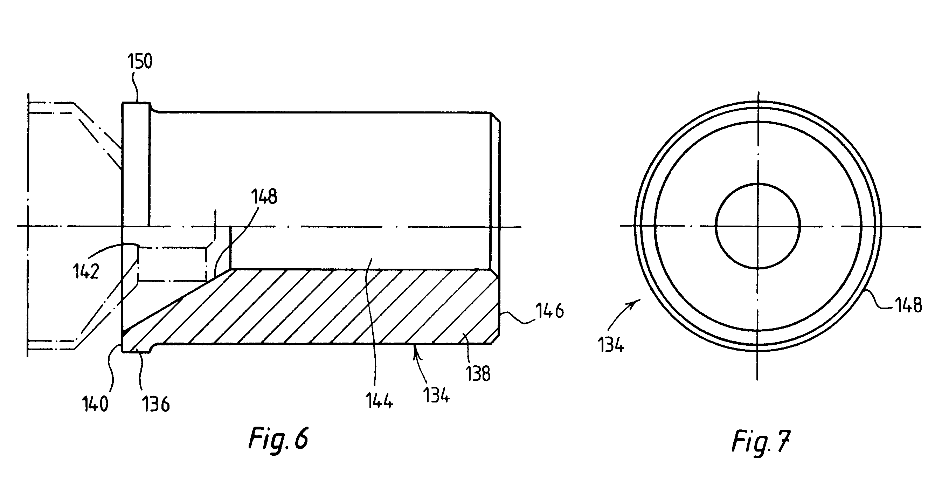

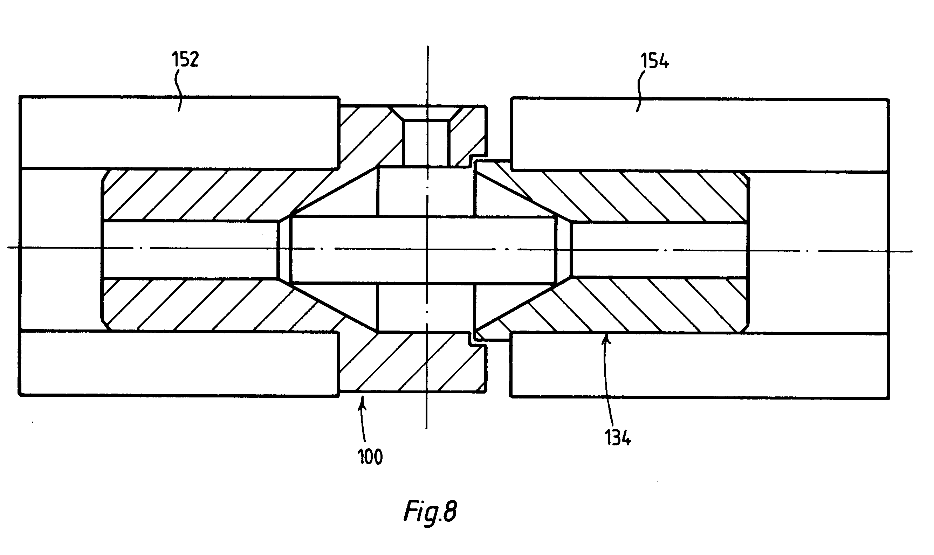

Mit 134 ist in Fig.6 und 7 der zweite Kontakt bezeichnet, der zusammen mit dem Kontakt 100 den Ofen hält. Der zweite Kontakt 134 weist ein Kopfstück 136 und einen Schaft 138 auf. Das Kopfstück 136 hat eine Stirnfläche 140. In der Stirnfläche 140 ist eine konische Vertiefung 142 gebildet, ähnlich dem Abschnitt 116 der Vertiefung 108. Die Vertiefung 142 erstreckt sich bis in den Schaft 138. An die Vertiefung 142 schließt sich ein Schutzgaskanal 144 an. Der Schutzgaskanal 144 erstreckt sich axial längs des gesamten Schaftes 138 und mündet in der hinteren Stirnfläche 146 des Schaftes 138. Um den Schutzgaskanal 144 herum bildet die Innenwandung der Vertiefung 142 eine konische Kontaktfläche 148. Die Kontaktfläche 148 ist komplementär zu der Kontaktfläche 28 des Kontaktstücks 20 des Ofens.

Das Kopfstück 136 weist eine zylindrische Mantelfläche 150 auf. Der zweite Kontakt 134 erstreckt sich mit dem Kopfstück 136 in den Abschnitt 110 der in der Stirnfläche 106 des Kontaktes 100 gebildeten Vertiefung 108. Die Mantelfläche 150 bildet dabei mit der Innenfläche des Abschnitts 110 einen ziemlich engen Trennspalt.

Im Betrieb ist der Ofen mit den Kontaktstücken 18 und 20 zwischen den Kontakten 100 und 134 gehalten. Die Kontakte 100 und 134 sitzen dabei in Kühlblöcken 152 bzw. 154. Dabei liegt die Kontaktfläche 122 des Kontaktes 100 an der Kontaktfläche 26 des Kontaktstücks 18 an. Die Kontaktfläche 148 des Kontaktes 134 liegt an der Kontaktfläche 28 des Kontaktstückes 20 an. Einmal erfolgt so eine definierte Halterung des Ofens. Zum anderen wird über die Kontakte Strom durch den Ofen geleitet. Schließlich bilden die Kontakte 100 und 134 einen im wesentlichen geschlossenen Hohlraum, in welchem der Ofen gehalten ist. Die Kontakte 100 und 134 und die Kontaktstücke 18 und 20 enthalten Schutzgaskanäle 118,144 bzw. 68,70, über welche Schutzgas zugeführt wird. Dieses Schutzgas wird durch die Schlitze 86,88 verteilt, so daß es den Ofen allseits umspült, und füllt den Hohlraum aus.

Das Meßlichtbündel des Atomabsorptions - Spektrometers tritt dabei längs der Achse 32 des Ofens durch den rohrförmigen Ofenteil wobei es oberhalb des Innenteils 76 verläuft. Auf den Innenteil wird durch die Eingabeöffnung 72 eine Probe aufgebracht. Durch Hindurchleiten von elektrischem Strom durch den Ofen wird dieser auf eine sehr hohe Temperatur aufgeheizt. Der Innenteil 76 wird dabei überwiegend indirekt durch Strahlung beheizt. Dabei wird die Probe atomisiert. Es bildet sich eine Atomwolke, in welcher die Elemente und auch ein gesuchtes Element in atomarem Zustand vorliegen. Aus der Absorption des von einer linienemittierenden Lichtquelle ausgehenden Meßlichtbündels in der Atomwolke kann auf die Menge des gesuchten Elements geschlossen werden. Stromzufuhr erfolgt quer zur Richtung des Meßlichtbündels und zur Achse des Ofens. Durch die beschriebene Ausbildung wird eine optimal gleichmäßige Temperaturverteilung längs des Ofens erreicht.

## Patentansprüche

1. Kontaktanordnung mit zwei Kontakten (100,134) für die Stromzufuhr zu einem rohrförmigen Ofen mit einer Längsbohrung zur elektrothermischen Atomisierung einer in die Längsbohrung eingebrachten Probe bei der Atomabsorptions-Spektroskopie, wobei der rohrförmige Ofen zwei quer zur Rohrachse des Ofens sich erstreckende, diametral gegenüberliegende Kontaktansätze aufweist und in einem abgeschlossenen Hohlraum angeordnet ist,
**dadurch gekennzeichnet, daß**
(a) die fluchtend auf einer Kontaktachse angeordneten Kontakte (100,134) Kopfteile (102,136) mit Vertiefungen aufweisen, die allein einen Hohlraum zur Aufnahme des rohrförmigen Ofens bilden,
(b) auf dem Grund der Vertiefungen Kontaktflächen (122,148) gebildet sind, zwischen denen die Kontaktansätze des rohrförmigen Ofens gehalten werden,
(c) in einem der Kopfteile (102) quer zu der Kontaktachse verlaufende Meßlichtbündel-Bohrungen (128,130) vorgesehen sind, die miteinander und mit der Längsbohrung des eingesetzten rohrförmigen Ofens fluchten,
(d) in besagtem Kopfteil (102) weiterhin eine Probeneinlaßöffnung (132) vorgesehen ist, und
(e) in den Hohlraum Schutzgaskanäle (118,144) zur Einleitung von Schutzgas münden, die in den Kontakten (100,134) verlaufen.

2. Kontaktanordnung nach Anspruch 1, **dadurch gekennzeichnet**, **dass**
(a) der erste Kontakt (100) einen Kopfteil (102) mit einer Stirnfläche (106) und einer Vertiefung (108) zur Aufnahme des Ofens in dieser Stirnfläche (106) aufweist,
(b) auf dem Grund der Vertiefung (108) eine Kontaktfläche (122) gebildet ist, durch welche im Betrieb der eine Kontaktansatz (18) des Ofens gehalten wird,
(c) auf dem Grund der Vertiefung (108) wenigstens ein Schutzgaskanal (118) mündet,
(d) in dem Kopfteil (102) weiterhin die quer zu der Kontaktachse verlaufenden, fluchtenden Messlichtbündel-Bohrungen (128, 130) vorgesehen sind,
(e) der zweite Kontakt (134) einen Kopfteil (136) mit einer Stirnfläche (140) aufweist, wobei die Stirnfläche (140) des zweiten Kontaktes (134) in geringem Abstand von der Stirnfläche (106) des ersten Kontaktes (100) angeordnet ist und die Vertiefung (108) zur Bildung des Hohlraumes abdeckt,
(f) durch eine Vertiefung in der Stirnfläche (140) des zweiten Kontaktes (134) eine Kontaktfläche (148) gebildet ist, durch welche im Betrieb der andere Kontaktansatz (20) des Ofens gehalten wird.

3. Kontaktanordnung nach einem der Ansprüche 1 oder 2, **dadurch gekennzeichnet, dass** die beiden Kontakte (100, 134) je einen im wesentlichen zylindrischen Schaft (104, 138) aufweisen, der in einem Kühlmantel (152, 154) gehalten ist.

4. Kontaktanordnung nach Anspruch 3, **dadurch gekennzeichnet, dass**
(a) der Schutzgaskanal (118, 144) jeweils durch den Schaft (104, 138) geführt ist und in die Stirnfläche (106, 140) des jeweiligen Kontaktes (100, 134) mündet und
(b) die Kontaktfläche (122, 148) die Mündung des jeweiligen Schutzgaskanals (118, 144) umgibt.

5. Kontaktanordnung nach Anspruch 4, **dadurch gkennzeichnet, dass** die Kontaktflächen (122, 148) in den beiden Kontakten (100, 134) gegenüberliegende konische Flächen sind, in die die Schutzgaskanäle (118, 144) münden.

## Claims

1. Contact arrangement containing two contacts (100,134) for supplying current to a tubular furnace having a longitudinal bore, for electrothermally atomising a sample introduced into the longitudinal bore in atomic absorption spectroscopy, said tubular furnace comprising two contact projections which extend transverse to the tube axis of the furnace and which are diametrically opposed to each other, and being arranged within a closed cavity,
**characterised in that**
(a) the contacts (100,134) are arranged in alignment along a contact axis and comprise head portions (102,136) which include recesses and solely define a cavity for accommodating the tubular furnace,
(b) contact surfaces (122,148) are formed at the bottom of the recesses, said contact projections of the tubular furnace being held between the contact surfaces,
(c) bores (128,130) extending transverse to the contact axis are provided in one of the head portions (102) for a measuring light beam, said bores being aligned to each other and with the longitudinal bore of the inserted tubular furnace,
(d) a sample infeed port (132) is further provided in said head portion (102),
(e) protective gas passages (118,144) for infeeding protective gas open into the cavity and extend within the contacts (100,134).

2. Contact arrangement according to claim 1, **characterised in that**
(a) the first contact (100) comprises a head portion (102) including an end face (106) and a recess (108) for accommodating the furnace in said end face (106),
(b) a contact surface (122) is formed at the bottom of the recess (108) by means of which contact surface the one contact projection (18) of the furnace is held,
(c) at least one protective gas passage (118) opens into the bottom of the recess (108),
(d) the aligned bores (128,130) for the measuring light beam which extend transverse to the contact axis, are further provided in the head portion (102),
(e) the second contact (134) comprises a head portion (136) including an end face (140), said end face (140) of the second contact (134) being arranged at a small distance from the end face (106) of the first contact (100) and covering the recess (108) in order to thereby form the cavity,
(f) a contact surface (148) is formed by means of a recess in the end face (140) of the second contact (134), the other contact projection (20) of the furnace being held by said contact surface (148) during operation.

3. Contact arrangement according to any one of claims 1 or 2, **characterised in that** the two contacts (100,134) each comprise a substantially cylindrical shaft (104,138) which is held in a respective cooling jacket (152,154).

4. Contact arrangement according to claim 3, **characterised in that**
(a) the protective gas passages (118,144) are passed through the respective shafts (104,138) and open into the end face (106,140) of the respective contacts (100,134), and
(b) the contact surface (122,148) surrounds the mouth of the respective protective passages (118,144).

5. Contact arrangement according to claim 4, **characterised in that** the contact surfaces (122,148) formed in respective ones of the two contacts (100,134) comprise oppositely disposed conical surfaces into which the respective protective gas passages (118,144) open.

## Revendications

1. Disposition de contacts munie de deux contacts (100,134) pour l'alimentation en courant vers un four tubulaire présentant un alésage longitudinal destiné à l'atomisation électrothermique d'un échantillon introduit dans l'alésage longitudinal dans la spectroscopie à absorption atomique, le four tubulaire présentant deux talons de contact diamétralement opposés et s'étendant transversalement à l'axe de tuyau du four, le four tubulaire étant disposé dans une cavité fermée,
**caractérisée par le fait que**
(a) les contacts (100,134) disposés en alignement l'un sur l'autre sur un axe de contact, présentent des éléments de tête (102,136) munis de creux, formant tout seul une cavité afin d'accomoder le four tubulaire,
(b) des surfaces de contact (122,148) sont formées sur le fond des creux, les talons de contact du four tubulaire étant tenus entre ces surfaces de contact,
(c) des alésages de faisceau lumineux (128,130) sont prévus dans l'un des éléments de tête (102) transversalement à l'axe de contact, alésages qui sont alignés l'un sur l'autre et sur l'alésage longitudinal du four tubulaire introduit,
(d) en outre, une ouverture d'introduction d'échantillon (132) est prévue dans ledit élément de tête (102), et
(e) des canaux de gaz inerte (118,144) destinés à l'introduction de gaz inerte, débouchent dans la cavité et s'étendent dans les contacts (100,134).

2. Disposition de contact selon la revendication 1, **caractérisée par le fait que**
(a) le premier contact (100) présente un élément de tête (102) muni d'un front (106) et un creux (108) destiné à accomoder le four dans ce front (106),
(b) une surface de contact (122) se forme sur le fond du creux (108), et supporte pendant l'opération, un talon de contact (18) du four,
(c) au moins un canal de gaz inerte (118) débouche dans le fond du creux (108),
(d) en outre, les alésage de faisceau lumineux de mesure (128,130) alignés et s'étendant transversalement à l'axe de contact, sont prévus dans l'élément de tête (102),
(e) le second contact (134) présente un élément de tête (136) avec un front (140), le front (140) du second contact (134) étant disposé à peu d'écart du front (106) du premier contact (100) et couvrant le creux (108) en vue de former la cavité,
(f) une surface de contact (148) du second contact (134) est formée par un creux dans le front (140), et supporte pendant l'opération l'autre talon de contact (20) du four.

3. Disposition de contact selon l'une des revendications 1 ou 2, **caractérisée par le fait que** les deux contacts (100,134) présentent chacun une tige généralement cylindrique (104,134) tenue dans une chemise de refroidissement (152,154).

4. Disposition de contact selon la revendication 3, **caractérisée par le fait que**
(a) le canal de gaz inerte (118,144) est respectivement conduit à travers la tige (104,138) et débouche dans le front (106,140) du contact respectif (100,134), et
(b) la surface de contact (122,148) entoure l'ouverture du canal de gaz inerte respectif (118,144).

5. Disposition de contact selon la revendication 4, **caractérisée par le fait que** les surfaces de contact (122,148) dans les deux contacts (100,134) sont des surfaces coniques opposées dans lesquelles débouchent les canaux de gaz inerte (118,144).
